(19) **Europäisches Patentamt European Patent Office Office européen des brevets**

(11) **EP 3 687 279 B1**

(12) **EUROPEAN PATENT SPECIFICATION**

(45) Date of publication and mention of the grant of the patent:
**27.10.2021 Bulletin 2021/43**

(51) Int Cl.:
***A01G 24/30*** *(2018.01)*

(21) Application number: **18786131.5**

(22) Date of filing: **22.09.2018**

(86) International application number:
**PCT/US2018/052323**

(87) International publication number:
**WO 2019/067330 (04.04.2019 Gazette 2019/14)**

(54) **METHOD OF MAKING A HORTICULTURAL GROWTH MEDIUM**

VERFAHREN ZUR HERSTELLUNG EINES WACHSTUMSMEDIUMS FÜR DEN GARTENBAU

PROCÉDÉ DE PRÉPARATION D'UN MILIEU DE CROISSANCE HORTICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2017 US 201762565287 P**

(43) Date of publication of application:
**05.08.2020 Bulletin 2020/32**

(73) Proprietor: **Dow Global Technologies LLC Midland, MI 48674 (US)**

(72) Inventors:
- **SCHOENER, Cody**
  **Lake Jackson, Texas 77566 (US)**
- **SRIVASTAVA, Yasmin N.**
  **Lake Jackson, Texas 77566 (US)**

(74) Representative: **Beck Greener LLP Fulwood House 12 Fulwood Place London WC1V 6HR (GB)**

(56) References cited:
**DE-A1- 2 521 277     US-A- 3 805 531
US-A- 4 402 725     US-A- 4 701 476**

EP 3 687 279 B1

**Description**

This invention relates to a method for making a horticultural growth medium.

Plants and/or plant seedlings and/or seeds may be planted and grown in a bound growth medium that includes a synthetic binder and a particulate solid such as soil. These growth media take the form of a porous, typically deformable solid in which the particles of soil or other particulate solid are bound together by the binder. The porous structure provides room for root growth and allows air and water to penetrate easily into the growth medium. The porous structure and hydrophilic nature of the binder help the growth medium hold water.

Such a growth medium may substitute for loose media such as ordinary soil. Because the binder holds the particulate solid together, it forms a cohesive mass that can be shaped by molding or other processes into any convenient shape and dimensions. It is not necessary to contain the growth medium in a pot or other container. Because of this, the growth medium is ideally suited for use in emerging applications such as decorative green infrastructure, examples of which include green walls and green roofs in which growing plants form an exterior surface. Other applications include seeded mats for easy do-it-yourself plant growing or improved grass production from growth to installation.

A further advantage of bound growth systems is nutrients, fertilizers, or other growth additives are easily incorporated.

A hydrophilic polyurethane polymer is frequently used as the binder material. These binder polymers are formed by moisture-curing an isocyanate-terminated quasi-prepolymer. Generally, the quasi-prepolymer, water and usually a soil material are combined. The isocyanate groups of the quasi-prepolymer react with a portion of the water to produce the polyurethane binder. This reaction generates carbon dioxide gas, which becomes trapped in the polymer and forms cells.

The quasi-prepolymer used industrially in these applications is almost always based on toluene diisocyanate. Toluene diisocyanate-based quasi-prepolymers have several attributes that are particularly desirable in making bound growth media. The rate at which they cure is very well suited for these applications. When cured, the resulting polymer exhibits a beneficial pore structure that promotes water absorption and retention and rapid wicking. However some physical properties such as tear strength are sometimes in adequate.

Despite the good performance of these binder systems, there is a desire to reduce or eliminate toluene diisocyanate from them. The major commercially available alternatives to toluene diisocyanate are diphenylmethane diisocyanate (MDI) and so-called "polymeric MDI" (or "PMDI") which is a mixture of diphenylmethane diisocyanate and methylene-bridged higher homologues of MDI that have three or more phenylisocyanate groups per molecule. US 6 479 433 B, US 4 402 725 A, US 3 805 531 A and DE 25 21 277 A1, for example, describes the use of quasi-prepolymers made using polymeric MDI to produce bound growth media.

To date, binder systems based on MDI or PMDI quasi-prepolymers have not been satisfactory replacements for the toluene diisocyanate-based systems. The MDI and PMDI prepolymers tend to be much lower in reactivity, which makes them cure much more slowly. It is noted here that the curing reaction is generally uncatalyzed in these applications due to the desire to avoid incorporating metal compounds and volatile amines, which can contribute to odor, may leach from the growth medium and might have adverse affects on plant growth.

In addition, bound growth media made from MDI or PMDI based-prepolymers have tended to lack important performance features. They have generally had higher densities and poorer tear strength.

It remains desirable to replace toluene diisocyanate-based prepolymers in bound growth media applications.

This disclosure relates in one aspect is a horticultural growth medium comprising:

a) 25 to 99 weight percent, based on the combined weights of components a) and b), of a particulate filler, wherein the particulate filler is embedded in

b) 75 to 1 weight percent, based on the combined weights of components a) and b), of porous polyurethane-urea polymer formed by moisture-curing an isocyanate-functional quasi-prepolymer, which isocyanate-functional quasi-prepolymer is a reaction product of at least one hydroxyl-terminated polymer of ethylene oxide with an excess of an organic polyisocyanate that includes at least 80 weight-% diphenylmethane diisocyanate of which diphenylmethane diisocyanate at least 60 weight-% is 4,4'-diphenylmethane diisocyanate, wherein the isocyanate-functional quasi-prepolymer has prior to moisture curing an isocyanate content of 5 to 15% by weight and contains 35 to 50 weight percent of oxyethylene units, based on the weight of the isocyanate-functional quasi-prepolymer.

The invention is a method of making said horticultural growth medium, comprising:

A. forming a mixture containing
a) 10 to 99 weight percent, based on the combined weights of components a) and b), of at least one particulate filler, b) 90 to 1 weight percent, based on the combined weights of components a) and b), of an isocyanate-functional quasi-prepolymer, which isocyanate-functional quasi-prepolymer is a reaction product of at least one hydroxyl-terminated polymer of ethylene oxide with an excess of an organic polyisocyanate that includes at least 80 weight-% diphenylmethane diisocyanate of which diphenylmethane diisocyanate at least 60 weight-% is 4,4'-diphenylmethane diisocyanate, wherein the isocyanate-functional quasi-prepolymer has prior to moisture curing an isocyanate content of 5 to 15% by weight and contains 35 to 50 weight percent of oxyethylene units based on the weight of the isocyanate-functional quasi-prepolymer, and c) 10 to 90 weight percent water, based on the combined weights of components a), b) and c) and

B. solidifying the mixture obtained in step A by moisture-curing the isocyanate-functional quasi-prepolymer to form a porous polyurethane-urea polymer in which the particulate filler is embedded.

The particulate filler is any material that is a solid at a temperature of at least 50°C, is in the form of particles, and which does not inhibit the growth of a plant or fungus planted in the horticultural growth medium. The particulate filler may or may not contain one or more nutrients for the plant or fungus.

Suitable particulate fillers therefore include materials that are inert to plant or fungal growth such as, inorganic materials like sand, clay, a hydrated silica such as vermiculite and/or perlite, biotite, phlogopite, polymer foam particles (apart from the binder), limestone, gypsum, mica, hydrated obsidian, diatomaceous earth, other ground rock, carbon black, graphite and the like. Also included are organic materials or materials that include one or more organic components such as soil, moss (such as peat moss and/or sphagnum moss), ground or chopped plant matter, manure, coconut and other plant fiber, garbage, ground tree bark, wood shavings, sawdust, coffee grinds, humus, charcoal, coke, coal and the like. The particulate filler may consist of or include fertilizer pellets or other pelletized nutrient compositions.

The particulate filler may also include solid functional additives such as solid fungicides, insecticides, pigments, selective herbicides, and the like.

Mixtures of any two or more of the foregoing particulate fillers may be used.

The particle size may be, for example, up to 10 millimeters (longest dimension) as determined by sieving methods.

The quasi-prepolymer is a reaction product of an organic polyisocyanate that includes diphenylmethane diisocyanate (MDI) and a polyether that contains oxyethylene groups. By "quasi-prepolymer", it is meant that the reaction product is a mixture of free (unreacted) organic polyisocyanate and isocyanate-terminated prepolymer molecules formed in the reaction of the polyether and organic polyisocyanate molecules. The amount of free organic polyisocyanate may constitute, for example, at least 5 percent, at least 10 percent, at least 15 percent or at least 20 percent of the total weight of the prepolymer, to as much as 50 percent, as much as 35 percent, as much as 30 percent or as much as 25 percent thereof.

MDI constitutes at least 80% of the weight of the organic polyisocyanate. It may constitute at least 85%, at least 90% or at least 95% thereof, and may constitute up to 100% or up to 99% thereof. The MDI contains 4,4'-diphenylmethane diisocyanate (4,4'-MDI) or a mixture of thereof with 2,4'-diphenylmethane diisocyanate (2,4'-MDI). At least 60%, at least 70%, at least 75% or at least 80 of the weight of the MDI may be the 4,4'- isomer. The 4,4'-isomer may constitute up to 100%, up to 99%, up to 98% of the weight of the MDI.

In some embodiments, the organic polyisocyanate may have a number average isocyanate functionality of 1.95 to 2.15, preferably 1.95 to 2.05, and an isocyanate equivalent weight of 123 to 128, preferably 124 to 126.

The organic polyisocyanate may contain up to 20 weight-%, preferably up to 10 weight-%, up to 5 weight-% or up to 2 weight-%, of other isocyanate-containing compounds although any or all of those other compounds may be absent. Examples of other isocyanate-containing compounds include 2,2'-diphenylmethane diisocyanate (which is often present at very small levels in commercially available MDI products), polyphenylene polymethylene polyisocyanates having three or more rings, toluene diisocyanate, one or more aliphatic polyisocyanates, and the like, as well as isocyanate-containing compounds that contain, for example, biuret, allophanate, urea, urethane, isocyanurate and/or carbodiimide linkages,

The organic polyisocyanate may contain at least 60 weight-%, at least 70 weight-% or at least 80 weight-% of 4,4'-diphenylmethane diisocyanate.

The most preferred organic polyisocyanate is an MDI product that contains at least 60 weight-%, at least 70 weight-% or at least 80 weight-% 4,4'-MDI, up to 40 weight-%, preferably up to 30 weight-% or up to 20 weight-% 2,4'-MDI and 0 to 2 weight percent of other isocyanate compounds.

The polyether used to make the quasi-prepolymer contains oxyethylene groups. It is conveniently a hydroxyl-terminated homopolymer of ethylene oxide or hydroxyl-terminated random or block copolymer of ethylene oxide and 1,2-propylene oxide. The polyether may contain, for example, at least 50% or at least 60% by weight of oxyethylene groups and as much as 100% by weight oxyethylene groups. A polyether of particular interest is a poly(ethylene oxide) homopolymer. Another is a random or block copolymer of ethylene oxide and 1,2-propylene oxide which contains 50 to 95%, preferably 60 to 95%, of oxyethylene groups and correspondingly 5 to 50%, preferably 5 to 40%, of 2-methyloxypropylene groups.

The polyether(s) may nominally contain, for example, a number average of 2 to 4 hydroxyl groups per molecule.

A preferred nominal average hydroxyl functionality is 2 to 3 and a more preferred nominal average hydroxyl functionality is 2 to 2.5 or 2 to 2.25. Nominal functionality refers to the number of hydroxyl groups on the initiator compound(s) used in producing the polyether(s).

The equivalent weight of the polyether preferably is at least 300 or at least 450, and may be, for example, up to 6000, up to 3000 or up to 2000. An especially preferred equivalent weight range is from 500 to 1800.

A mixture of two or more polyethers may be used to make the quasi-prepolymer.

A branching agent and/or chain extender is optionally present when the quasi-prepolymer is formed. Such a branching agent or chain extender may have a hydroxyl equivalent weight of up to 250 or up to 125, and may have at least 3 hydroxyl groups per molecule in the case of a branching agent and exactly two hydroxyl groups per molecule in the case of a chain extender. If these are present at all, they are suitably present in an amount of up to 5, preferably up to 2, parts by weight per 100 parts by weight polyethers.

The equivalent weight and oxyethylene content of the polyether(s) are selected together with the amount of organic polyisocyanate to produce a quasi-prepolymer having an isocyanate content of 5 to 15% by weight of the quasi-prepolymer and an oxyethylene content of 30 to 50% by weight of the quasi-prepolymer. The isocyanate content may be at least 6% or at least 7% and may be, for example, up to 12%, up to 10% or up to 9%.

The isocyanate content of the quasi-prepolymer may be determined using well-known titration methods.

The oxyethylene content of the quasi-prepolymer is conveniently calculated from the oxyethylene content of the polyether(s) and the weights of the reactive starting materials, *i.e.*, the weights of polyether(s) and organic polyisocyanate used in making the quasi-prepolymer, as well as the weights of any branching agents and/or chain extenders as may be used.

The quasi-prepolymer is conveniently prepared by mixing the organic polyisocyanate and polyether(s) and subjecting the mixture to conditions under which the isocyanate groups and hydroxyl groups react to form urethane linkages. This reaction is conveniently performed at an elevated temperature (such as from 60 to 180°C) and preferably under an inert atmosphere such as nitrogen, helium or argon. The reaction is generally continued until the prepolymer attains a constant isocyanate content, indicating the consumption of essentially all the hydroxyl groups of the polyether.

The quasi-prepolymer preferably is made in the substantial absence of a urethane catalyst, *i.e.* a catalyst for the reaction of an isocyanate group with a hydroxyl group to for a urethane. In particular, the reaction mixture preferably contains no more than 1 part per million by weight of metals and no more than 100 parts per million of amine compounds. The resulting quasi-prepolymer accordingly contains similarly small amounts of such materials (if any at all). The polyether(s) preferably are not amine-initiated and do not otherwise contain amine groups that exhibit activity as urethane catalysts.

The horticultural growth medium is produced by forming a mixture that includes the particulate filler, the quasi-prepolymer and water, and curing the mixture by reaction of water with isocyanate groups of the quasi-prepolymer. This reaction forms a binder polymer. The result is a porous solid growth medium in which the particulate solid is embedded in the binder.

The amount of particulate solid may be at least 10, at least 20, at least 25, at least 30, at least 35, or at least 40% of the combined weight of particulate solid and quasi-prepolymer. The amount of particulate solid may be up to 99%, up to 90%, up to 80%, up to 75%, up to 65% or up to 60%, on the same basis.

Correspondingly, the amount of quasi-prepolymer in the mixture may be at least 1%, at least 2%, at least 5%, at least 10% at least 15%, at least 25%, at least 35% or at least 40% of the combined weight of particulate solid and quasi-prepolymer and may be up to 90%, up to 80%, up to 75%, up to 70%, up to 65% or up to 60% thereof.

Water constitutes at least 10% of the combined weight of the particulate solid, quasi-prepolymer and water. It may constitute at least 20%, at least 35%, at least 40% or at least 50%, and up to 90%, up to 80% or up to 75% thereof. These amounts of water are far in excess of that needed to cure the quasi-prepolymer. The excess water is believed to occupy space during the curing reaction, thereby moderating the exothermic temperature increase and also contributing to porosity.

The mixture may contain other ingredients, which are considered optional and may be omitted. These include one or more surfactants, which preferably are present in an amount constituting, for example, 0.1 to 5, especially 0.5 to 3, percent to the total weight of all components of the reaction mixture except the water. Surfactants can function, for example, to help modulate the porosity of the culture medium by affecting cells size, open cell content and tortuosity of the pore system. The pore structure impacts characteristics such as water detention and retention rates, hydration rates, filtering capability and oxygen permeation through the culture medium.

Various types of surfactants are suitable, including, for example, silicone surfactants of various types, and various anionic, cationic, zwitterionic and non-ionic surfactants. A class of solvents of particular interest is the block copolymers of ethylene oxide and a higher alkylene oxide such as 1,2-propylene oxide and 1,2-butylene oxide. Such block copolymers may contain, for example, 40 to 90% by weight oxyethylene units and have molecular weights of 1500 to 12,000. Such block copolymers may have one or more hydroxyl groups. Examples of suitable block copolymers include those sold by The Dow Chemical Company under the Tergitol™ trade name, and those sold by BASF under the Pluronics™ trade name.

The reaction mixture may contain one or more branching agents and/or chain extenders as described before, but these are optional and can be omitted. If used, they preferably are present in an amount of up to 5 parts by weight or up to 2 parts by weight, per 100 parts by weight of the quasi-prepolymer.

The reaction mixture also may contain various liquid functional ingredients such as fertilizers, nutrients, fungicides, insecticides, pigments, selective herbicides, and the like. If present, these preferably constitute up to 10% or up to 5% of the total weight of the reaction mixture.

The reaction mixture preferably is devoid of a curing catalyst, *i.e.* a catalyst for the reaction of isocyanate groups toward water.

The mixture can be prepared by combining the ingredients in any order, although it is preferred to add the water or quasi-prepolymer last to avoid premature reaction before all ingredients can be combined. Thus, for example, the particulate filler can be first formed into a slurry by combining it with water (and optional ingredients, if any), followed by adding the quasi-prepolymer. Alternatively, the quasi-prepolymer and particulate solid (and optional ingredients, if any) can be combined, followed by adding the water, it being noted that in this case the particulate solid should be carefully dried before being combined with the quasi-prepolymer to avoid premature reaction. Watersoluble optional ingredients can in either case be added together with the water or separately.

Curing occurs spontaneously upon mixing the water with the quasi-prepolymer. The curing temperature may be as low as 0°C or as high as 100°C. Temperatures near room temperature or slightly elevated are entirely suitable and generally preferred. Thus, the curing temperature may be at least 15°C or at least 20°C and up to 50°C, 40°C or 35°C. The curing reaction produces carbon dioxide gas that forms cells in the cured binder and thus contributes to the desired porosity of the horticultural growing medium. An expansion of the reaction mixture occurs as the curing takes place due to the formation of this carbon dioxide gas.

The curing step may be performed in a mold to form a shaped growth medium. The mold may take the form of a "flat" or tray that contains multiple compartments, each having internal dimensions that define the size and shape of the individual growth media. Flats of this type are particularly useful for producing individual "plugs" for growing a single plant or fungus.

The size of such a plug may vary considerably. A plug may have, for example, a height (top-to-bottom, with the top being defined as the surface from which a plant or fungus emerges or will emerge) of 12 mm to 300 mm or more. The largest cross-sectional area (taken perpendicular to the height) of a plug may be, for example, 6 mm to 150 mm.

Larger bodies of the horticultural growth medium may of course be produced, if intended to hold larger plant or fungal species or multiple organisms. For example, the horticultural growth medium may be formed into mats having surface areas (as measured on the top surface) of, for example, 0.02 square meter or any arbitrarily larger size. Such mats may be produced as rollstock for mass plantings, such as sodding, green roof installations or field planting.

Larger bodies may be produced and then further fabricated, by cutting, grinding, lathing or other methods, to form smaller bodies having specific geometries.

Other useful but optional fabrication steps include crushing (to open cells) and piercing or other methods of hole formation to, for example, insert a seed or spore.

An advantage of the horticultural growth medium of the disclosure is its desirable curing profile, which makes it well adapted for use in automated, continuous processes. For example, the growth medium may exhibit a tack-free time, measured as described in the following examples, of 2 to 4 minutes. It may exhibit a rise time, again measured in accordance with the method described in the examples, of 4 to 10 minutes, and in preferred embodiments 4-1/2 to 8 minutes or 4-1/2 to 7 minutes. These curing characteristics provide enough open time to combine the ingredients, mix them and discharge them to a form or mold, while providing for short cycle times and rapid production rates.

The cured horticultural growth medium is characterized in being porous (when dried) and, when dried, capable of absorbing and retaining liquid moisture. A dried growth medium of the disclosure may exhibit a water uptake of at least 500 weight percent, based on the weight of the dried growth medium, when measured as indicated in the following examples. The water uptake may be at least 600% to as much as 1000% or more. The wet density may be, for example, 0.25 to 1.5 g/cm$^3$ or 0.5 to 0.75 g/cm$^3$, measured as indicated in the following examples.

Another advantage of the horticultural growth medium of the disclosure is its excellent mechanical strength and resistance to handling and deformation, even when saturated with water. This attribute is indicated by its wet tear strength, which may be, for example, at least 0.5 lb-f-/in (pound-force per inch, 87.5 N/m), at least 1.0 lb-f/in (175 N/m) or at least 1.2 lb-f/in (210 N/m) and in some embodiments may be up to 3 lb-f/in (525 N/m).

Plants and/or fungi are grown in the horticultural growth medium of the disclosure. A plant seed, plant seedling, cutting, callus culture, growing plant and/or fungus spore is embedded in the medium. The plant seed, plant seedling or fungus spore is then cultivated in the horticultural growing medium to produce a plant or fungus rooted in the horticultural growing medium.

By "cultivated", it is simply meant that the organism embedded in the horticultural growth medium is subjected to conditions such that the organism grows and develops into a plant or fungus, as the case may be. Growth typically includes at least the development of a root structure (or hyphae and/or a mycelium, in the case of a fungus) that extends into the growth medium. An organism that develops such a structure extending into the growth medium is "rooted" in the growth medium. Growth typically will also include the development and/or further growth (in the case of a seedling or growing plant) of an aboveground portion of the organism. Growth conditions are in general dictated by the particular organism being grown, but in general will include at least exposure to water and a growth temperature from 0 to 50°C and more typically 10 to 40°C. The conditions may further include exposure to light (in the case of plants) or darkness (in the case of certain fungi).

The type of plant that can be grown in the horticultural growth medium is not particularly limited. A plant may be a monocot or dicot. It may be an ornamental plant, a landscaping plant, or a food-producing plant. A food-producing plant may be but is not limited to an herb, a flowering vegetable, a leafy vegetable or a brassica vegetable. A plant may be one that has industrial uses or produces plant parts that have industrial uses, such as cotton, flax, hemp, balsa, pine, oak, maple or tobacco, among many others. A plant may be a ground cover such as a grass. A plant may be one that has been genetically modified to produce an industrial chemical, pharmaceutical or other useful product. Suitable fungi include, for example, edible and/or medicinal mushrooms, truffles and the like.

The embedding step can be performed simultaneously with the curing step, by curing the water/filler/quasi-polymer mixture in the presence of the plant seed, plant seedling, cutting, callus culture, growing plant and/or fungus spore. Alternatively, the embedding step can be performed after the curing step is completed.

The following examples are provided to illustrate the invention, but are not intended to limit the scope thereof. All parts and percentages are by weight unless otherwise indicated.

**Examples 1-5 and 3-A and Comparative Samples A-C**

A. Quasi-prepolymer formation

Quasi-Prepolymers (QPs) 1-5 and Comparative Quasi-Prepolymers A-C are made in the following general manner, from ingredients as indicated in Table 1. The polyol(s) are dried to a moisture content of less than 250 ppm by heating them to 100°C overnight with stirring under nitrogen. A trace of benzoyl chloride is added to the dried polyols and stirred in. The polyisocyanate(s) are separately heated to 50°C and combined with the polyol(s). The resulting reaction mixture is heated at 75°C under nitrogen until a constant isocyanate content is obtained. The quasi-prepolymer is then cooled to room temperature and stored under nitrogen.

The NCO content is measured according to ASTM D5155. The oxyethylene content of the quasi-prepolymer is calculated from that of the starting materials. The p,p'- (4,4'-) content of the isocyanate(s) is calculated from those of the starting isocyanates. The resulting values are as reported in Table 1.

Polyol A is a copolymer of ethylene oxide and propylene oxide having a nominal hydroxyl functionality of 2 and a number average molecular weight of approximately 2,400 g/mole. It contains 64% oxyethylene groups. Polyol A is commercially available as UCON™ PCL-270 polyol from The Dow Chemical Company.

Polyol B is a copolymer of ethylene oxide and propylene oxide having a nominal hydroxyl functionality of 3 and a number average molecular weight of approximately 5,000 g/mole. It contains 75% oxyethylene groups. Polyol B is commercially available as VORANOL™ CP-1421 polyol from The Dow Chemical Company.

Polyol C is a 1000 molecular weight, nominally difunctional homopolymer of ethylene oxide. It contains 100% oxyethylene groups. Polyol C is commercially available as Carbowax™ 1000 polyol from The Dow Chemical Company.

Polyol D is trimethylolpropane.

Isocyanate A is a mixture of 98% 4,4'-MDI and 2% 2,4'-MDI. It has an isocyanate content of 33.5%. Isocyanate A is available from The Dow Chemical Company as ISONATE™ 125M polyisocyanate.

Isocyanate B is a mixture of 50% 4,4'-MDI and 50% 2,4'-MDI. It has an isocyanate content of 33.5%. Isocyanate B is available from The Dow Chemical Company as ISONATE™ 50 O,P polyisocyanate.

Isocyanate C is a mixture of 80% 2,4-toluene diisocyanate and 20% 2,6-toluene diisocyanate.

**Table 1**

| Ingredient | Parts By Weight | | | | | | | |
|---|---|---|---|---|---|---|---|---|
| | QP-1 | QP-2 | QP-3 | QP-4 | QP-5 | QP-A* | QP-B* | QP-C* |
| Polyol A | 66.2 | 63.8 | 62 | 56.5 | 51.6 | 0 | 65 | 0 |
| Polyol B | 7.4 | 7.1 | 7 | 6.3 | 5.7 | 0 | 0 | 0 |
| Polyol C | 0 | 0 | 0 | 0 | 0 | 52 | 0 | 58 |
| Polyol D | 0 | 0 | 0 | 0 | 0 | 13 | 0 | 4 |

(continued)

| Ingredient | Parts By Weight | | | | | | | |
|---|---|---|---|---|---|---|---|---|
| | QP-1 | QP-2 | QP-3 | QP-4 | QP-5 | QP-A* | QP-B* | QP-C* |
| Isocyanate A | 15.9 | 17.5 | 19 | 22.4 | 25.6 | 21 | 0 | 0 |
| Isocyanate B | 10.6 | 11.7 | 12 | 14.9 | 17.1 | 14 | 35 | 0 |
| Isocyanate C | 0 | 0 | 0 | 0 | 0 | 0 | 0 | 38 |
| **Properties** | | | | | | | | |
| NCO Content, % | 6.4% | 7.4% | 8% | 10.3% | 12.4% | 7% | 9.3% | 9.8 |
| Oxyethylene content | 48% | 46 | 45% | 41% | 37% | 65% | 42% | 58 |
| 4,4'-MDI isomer content | 80% | 80% | 80% | 80% | 80% | 80% | 50% | N/A |
| *Comparative. | | | | | | | | |

B. Preparation of Horticultural Growth Media

Horticultural Growth Media Examples 1-5 and Comparative Media A-C are made from Quasi-Prepolymers 1-5 and A-C, respectively.

Surfactant Solution A is an ethylene oxide/propylene oxide block copolymer having a molecular weight of about 2500 and a nominal hydroxyl functionality of 2, diluted with water at a ratio of 1 part of the copolymer to 9 parts water.

Surfactant Solution B is a 1:9 mixture of an ethylene oxide/propylene oxide/ethylene oxide triblock copolymer and water. The central poly(propylene oxide) block of the copolymer has a molecular weight of 1750. The outer poly(ethylene oxide) blocks constitute 80% of the total weight of the copolymer. The copolymer has a nominal hydroxyl functionality of 2.

The Filler is a physical mixture of sphagnum peat moss, perlite, and limestone, commercially available from SunGro Horticulture.

14.3 parts of the Filler, 7.2 parts of Surfactant Solution A, 3.1 parts of Surfactant Solution B and 629 parts of water are combined at room temperature. The quasi-prepolymer (12.5 parts) is then added at room temperature. No urethane catalyst is present. The resultant mixture is mixed with a high-speed mixer for 16 seconds and then allowed to react and foam in an open box mold. The resulting horticultural growth medium in each case is allowed to condition overnight at room temperature.

Horticultural Growth Medium 3-A is made in the same manner, using Prepolymer 3, except that the surfactant solutions are omitted. The reaction mixture contains 14 parts of Quasi-Prepolymer 3, 16 parts of the Filler and 70 parts of water.

The curing characteristics of these formulations each are evaluated by measuring tack-free time and rise time. Tack-free time is determined by periodically pressing a tongue depressor against the top surface of the foaming reaction mixture. The time that elapses from the start of visible foaming until the reaction mixture no longer sticks to the tongue depressor is the tack-free time. The time that elapses from the start of visible foaming until the foam height ceases to increase is the rise time.

Water uptake is measured by cutting the cured growth media into 1 inch x 1 inch x 2 inch (2.54 cm x 2.54 cm x 5.08 cm) test specimens. The test specimens are dried at 80°C for a minimum of 16 hours and immediately weighed. The dimensions of the dried specimen are measured in each case and used to calculate the dried specimen volume. The dry density is obtained by dividing the measured weight by calculated volume.

The weighed specimens are placed into an 800 mL tripor filled with 300 mL of water and allowed to soak overnight. The soaked specimens are removed from the water and allowed to sit under ambient conditions until water stops dripping from them. The specimens are then patted down with a paper towel to remove surface water and weighed. Percent water uptake is calculated as:

$$Water\ Uptake\ (\%) = ((Weight_{pat,dry} - Weight_{dry})\ /\ Weight_{dry}) * 100$$

wherein $Weight_{pat,dry}$ indicated the weight of the soaked specimen after removing surface water and $Weight_{dry}$ is the weight of the dried specimen before soaking. Wet density is then determined by measuring the dimensions of the soaked specimen, calculating its volume and dividing $Weight_{pat,dry}$ by the calculated volume.

Wet tear strength is measured according to ASTM D3574, Test F on sliced specimens having dimensions 6 inch x 1 inch x 1 inch (15.24 cm x 2.54 cm x 2.54 cm) with a 1.5 inch (3.81 cm) slit, using a crosshead travel speed of 500 mm/min. The test specimens are prepared for testing by equilibrating them in a constant temperature / constant humidity room overnight, immersing them in deionized water for 5 minutes and patting them dry for 30 seconds. Results of the foregoing testing are as indicated in Table 2.

**Table 2**

| Property | Example or Comparative Sample Designation | | | | | | | | |
|---|---|---|---|---|---|---|---|---|---|
| | Ex. 1 | Ex. 2 | Ex. 3 | Ex. 3-A | Ex. 4 | Ex. 5 | A* | B* | C* |
| Quasi-Prepolymer | QP-1 | QP-2 | QP-3 | QP-3 | QP-4 | QP-5 | QP-A | QP-B | QP-C |
| QP Isocyanate Content | 6.4 | 7.4 | 8.0 | 8.0 | 10.3 | 12.4 | 7.0 | 9.3 | 9.8 |
| QP oxyethylene content | | | | | | | 65% | 42% | 58 |
| MDI p.p'-content | 80 | 80 | 80 | 80 | 80 | 80 | 80% | 50% | N/A |
| Tack-free time, minutes:seconds | 2:15-2:33 | 2:15-2:33 | 2.50-3.00 | 2:35-2:45 | 2:20-2:35 | 2:45-3:00 | 1:35-1:45 | 4:50-5:10 | 3:10 |
| Rise time, minutes:seconds | 4:50-5:00 | 5:00-5:15 | 5:15-5:25 | 5:20-5:30 | 6:00-6:10 | 6:50-7:00 | 3:45-3:50 | 19:00-20:00 | 5:00-5:20 |
| Dry density, $g/cm^3$ | 0.19 | 0.17 | 0.16 | 0.19 | 0.14 | 0.16 | 0.17 | 0.12 | 0.13 |
| Wet density, $g/cm^3$ | 0.57 | 0.67 | 0.61 | 0.70 | 0.63 | 0.69 | 0.78 | 0.60 | 0.61 |
| Water uptake, % | 545 | 703 | 627 | 633 | 692 | 670 | 611 | 851 | 644 |
| Wet tear strength, lb-f/in (N/m) | 2.66 (465) | 1.94 (339) | 1.92 (336) | 2.51 (439) | 1.23 (215) | 1.34 (234) | ** | 1.09 (191) | 0.25 (44) |
| *Not an example of the invention. **Sample has too little mechanical strength to measure. | | | | | | | | | |

Comparative Sample C represents a typical, toluene diisocyanate (TDI)-based formulation. Its tack-free and rise times are well adapted to industrial bound growth media processing, and it wet density and water uptake reflect industry targets.

Comparative Sample B shows the effect of using an MDI with high o,p'- content. The system cures very slowly compared to the TDI-based system (Comp. C), and is not suitable for industrial application.

Comparative Sample A shows the effect of using an MDI-prepolymer having a very high oxyethylene content. The system cures much faster than the TDI-based system, which makes processing difficult. Despite the fast cure, this growth medium fails to develop sufficient mechanical strength. Its mechanical properties are so poor that tear strength cannot be measured using the ASTM method.

Examples 1-5 exhibit an excellent balance of reactivity and properties. Tack-free and rise times are closely in line with those of the TDI-based control, as are dry densities and water uptakes. Tear strength is very much improved relative to the TDI-based control, being some 5 to 10 times greater. This allows for more robust handling, facilitates using automated handling equipment and prolongs useful life.

**Claims**

1. A method of making a horticultural growth medium, comprising:

A. forming a mixture containing
a) 10 to 99 weight percent, based on the combined weights of components a) and b), of at least one particulate filler, b) 90 to 1 weight percent, based on the combined weights of components a) and b), of an isocyanate-functional quasi-prepolymer, which isocyanate-functional quasi-prepolymer is a reaction product of at least one hydroxyl-terminated polymer of ethylene oxide with an excess of an organic polyisocyanate that includes at least 80 weight-% diphenylmethane diisocyanate of which diphenylmethane diisocyanate at least 60 weight-% is 4,4'-diphenylmethane diisocyanate, wherein the isocyanate-functional quasi-prepolymer has prior to moisture curing an isocyanate content of 5 to 15% by weight and contains 35 to 50 weight percent of oxyethylene units based on the weight of the isocyanate-functional quasi-prepolymer, and c) 10 to 90 weight percent water, based on the combined weights of components a), b) and c) and
B. solidifying the mixture obtained in step A by moisture-curing the isocyanate-functional quasi-prepolymer to form a porous polyurethane-urea polymer in which the particulate filler is embedded.

2. The method of claim 1 wherein the isocyanate-functional quasi-prepolymer has prior to moisture curing an isocyanate content of 6 to 15% by weight.

3. The method of claim 1 or 2 wherein the organic polyisocyanate contains at least 95% by weight of diphenylmethane diisocyanate.

4. The method of any of claims 1-3 wherein at least 80% of the diphenylmethane diisocyanate is 4,4'-diphenylmethane diisocyanate.

5. The method of any of claims 1-4 wherein the particulate filler constitutes 10 to 75 weight percent of the combined weight of components a) and b).

6. The method of any of claims 1-5 wherein the filler includes one or more of sand, clay, a hydrated silica, biotite, phlogopite, polymer foam particles, limestone, gypsum, mica, hydrated obsidian, diatomaceous earth, carbon black, graphite, soil, moss, ground or chopped plant matter, manure, plant fiber, garbage, ground tree bark, wood shavings, sawdust, coffee grinds, humus, charcoal, coke or coal.


**Patentansprüche**

1. Ein Verfahren zum Herstellen eines Wachstumsmediums für den Gartenbau, das Folgendes beinhaltet:

   A. Bilden einer Mischung, die Folgendes enthält:
   a) zu 10 bis 99 Gewichtsprozent, bezogen auf die kombinierten Gewichte der Bestandteile a) und b), von mindestens einem Partikelfüllstoff, b) zu 90 bis 1 Gewichtsprozent, bezogen auf die kombinierten Gewichte der Bestandteile a) und b), eines isocyanatfunktionellen Quasi-Präpolymers, wobei das isocyanatfunktionelle Quasi-Präpolymer ein Reaktionsprodukt von mindestens einem hydroxylterminierten Polymer von Ethylenoxid mit einem Überschuss eines organischen Polyisocyanats ist, das mindestens 80 Gew.-% Diphenylmethandiisocyanat umfasst, von dem Diphenylmethandiisocyanat mindestens 60 Gew.-% 4,4'-Diphenylmethandiisocyanat ist, wobei das isocyanatfunktionelle Quasi-Präpolymer vor der Feuchtigkeitshärtung einen Isocyanatgehalt von 5 bis 15 Gew.-% aufweist und bezogen auf das Gewicht des isocyanatfunktionellen Quasi-Präpolymers zu 35 bis 50 Gewichtsprozent Oxyethyleneinheiten enthält, und c), bezogen auf die kombinierten Gewichte der Bestandteile a), b) und c), zu 10 bis 90 Gewichtsprozent Wasser, und
   B. Verfestigen der Mischung, die in Schritt A durch die Feuchtigkeitshärtung des isocyanatfunktionellen Quasi-Präpolymers erhalten wird, um ein poröses Polyurethan-Harnstoff-Polymer zu bilden, in dem der Partikelfüllstoff eingebettet ist.

2. Verfahren gemäß Anspruch 1, wobei das isocyanatfunktionelle Quasi-Präpolymer vor der Feuchtigkeitshärtung einen Isocyanatgehalt von 6 bis 15 Gew.-% aufweist.

3. Verfahren gemäß Anspruch 1 oder 2, wobei das organische Polyisocyanat mindestens 95 Gew.-% von Diphenylmethandiisocyanat enthält.

4. Verfahren gemäß einem der Ansprüche 1-3, wobei mindestens 80 % des Diphenylmethandiisocyanats 4,4'-Diphenylmethandiisocyanat ist.

5. Verfahren gemäß einem der Ansprüche 1-4, wobei der Partikelfüllstoff zu 10 bis 75 Gewichtsprozent des kombinierten Gewichts der Bestandteile a) und b) ausmacht.

6. Verfahren gemäß einem der Ansprüche 1-5, wobei der Füllstoff eines oder mehrere von Sand, Lehm, einer Kieselsäure, Biotit, Phlogopit, Polymerschaumpartikeln, Kalkstein, Gips, Glimmer, hydriertem Obsidian, Diatomeenerde, Rußschwarz, Graphit, Erde, Moos, gemahlenem oder gehacktem Pflanzenmaterial, Dung, Pflanzenfaser, Abfall, gemahlener Baumrinde, Sägespänen, Sägemehl, Kaffeemehl, Humus, Aktivkohle, Koks oder Kohle umfasst.

**Revendications**

1. Un procédé de réalisation d'un milieu de croissance horticole, comprenant :

A. le fait de former un mélange contenant
a) de 10 à 99 pour cent en poids, rapporté aux poids combinés des constituants a) et b), d'au moins une charge particulaire, b) de 90 à 1 pour cent en poids, rapporté aux poids combinés des constituants a) et b), d'un quasi-prépolymère à fonction isocyanate, lequel quasi-prépolymère à fonction isocyanate est un produit de la réaction d'au moins un polymère à terminaison hydroxyle d'oxyde d'éthylène avec un excédent d'un polyisocyanate organique qui inclut au moins 80 % en poids de diphénylméthane diisocyanate, au moins 60 % en poids duquel diphénylméthane diisocyanate est le 4,4'-diphénylméthane diisocyanate, où le quasi-prépolymère à fonction isocyanate a préalablement au durcissement à l'humidité une teneur en isocyanate de 5 à 15 % en poids et contient de 35 à 50 pour cent en poids d'unités oxyéthylène rapporté au poids du quasi-prépolymère à fonction isocyanate, et c) de 10 à 90 pour cent en poids d'eau, rapporté aux poids combinés des constituants a), b) et c) et
B. le fait de solidifier le mélange obtenu à l'étape A par durcissement à l'humidité du quasi-prépolymère à fonction isocyanate afin de former un polymère polyuréthane-urée poreux dans lequel la charge particulaire est intégrée.

2. Le procédé de la revendication 1 où le quasi-prépolymère à fonction isocyanate a préalablement au durcissement à l'humidité une teneur en isocyanate de 6 à 15 % en poids.

3. Le procédé de la revendication 1 ou de la revendication 2 où le polyisocyanate organique contient au moins 95 % en poids de diphénylméthane diisocyanate.

4. Le procédé de n'importe lesquelles des revendications 1 à 3 où au moins 80 % du diphénylméthane diisocyanate est le 4,4'-diphénylméthane diisocyanate.

5. Le procédé de n'importe lesquelles des revendications 1 à 4 où la charge particulaire constitue de 10 à 75 pour cent en poids du poids combiné des constituants a) et b).

6. Le procédé de n'importe lesquelles des revendications 1 à 5 où la charge inclut une ou plusieurs matières parmi du sable, de l'argile, une silice hydratée, de la biotite, du phlogopite, des particules de mousse polymère, du calcaire, du gypse, du mica, de l'obsidienne hydratée, de la terre de diatomées, du noir de carbone, du graphite, du sol, de la mousse, des substances végétales broyées ou hachées, du fumier, de la fibre végétale, des déchets, de l'écorce d'arbre broyée, des copeaux de bois, de la sciure de bois, du café moulu, de l'humus, du charbon de bois, du coke ou du charbon.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6479433 B
- US 4402725 A
- US 3805531 A
- DE 2521277 A1